# FASCICULE DE BREVET EUROPEEN

(11) **EP 3 368 280 B1**
(45) Date de publication et mention de la délivrance du brevet: **25.11.2020**
(21) Numéro de dépôt: 16791649.3
(22) Date de dépôt: 13.10.2016
(51) Int. Cl.: B29C 70/38, B29C 70/54, B26D 1/08, B26D 1/06, B26D 5/12, B26D 1/00, B26D 1/02

(54) **MACHINE D'APPLICATION DE FIBRES AVEC SYSTEMES DE COUPE PARTICULIERS**
FASERAPPLIKATIONSMASCHINE MIT SPEZIFISCHEN SCHNEIDESYSTEMEN
FIBER-APPLICATION MACHINE COMPRISING SPECIFIC CUTTING SYSTEMS

(30) Priorité: 28.10.2015 FR 1502281
(43) Date de publication de la demande: 05.09.2018
(73) Titulaire: Coriolis Group, 56530 Quéven (FR)
(72) Inventeur: HAMLYN, Alexander, 56270 Ploemeur (FR); GAILLARD, Loïc, F-56600 Lanester (FR)
(86) Numéro de dépôt international: PCT/FR2016/000165
(87) Numéro de publication internationale: WO 2017/072421

(56) Documents cités:
- US-A- 4 259 144
- US-A1- 2005 061 422

## Description

La présente invention concerne une machine d'application de fibre et un procédé de réalisation de pièces en matériau composites avec une telle machine. L'invention concerne plus particulièrement une machine d'application de fibre équipée d'une tête d'application équipée de systèmes de coupe particuliers.

Il est connu des machines d'application de fibres pour l'application au contact sur un outillage de drapage, tel qu'un moule mâle ou femelle, d'une bande large formée d'une ou plusieurs fibres plates continues, de type mèches, sèches ou imprégnées de résine thermodurcissable ou thermoplastique, notamment des fibres de carbone, constituées d'une multitude de fils ou filaments de carbone.

Ces machines d'application de fibres, appelées également machines de placement de fibres, comprennent classiquement une tête d'application de fibres, un système de déplacement apte à déplacer la tête, des moyens de stockage de fibres pour stocker les fibres, et des moyens d'acheminement pour acheminer les fibres des moyens de stockage jusqu'à la tête. La tête comprend classiquement un rouleau d'application pour l'application d'une bande formée de plusieurs fibres sur une surface d'application, un système de guidage pour guider les fibres sous la forme d'une bande vers ledit rouleau d'application, des systèmes de coupe pour couper les fibres, ainsi que généralement des moyens de réacheminement des fibres et des moyens de blocage des fibres. Chaque système de coupe comprend classiquement une lame apte à être manœuvrée par un vérin de coupe entre une position de repos et une position active pour couper une fibre.

Dans certains systèmes de coupe proposés, la lame en position active vient en butée contre un contre-outil pour couper la fibre, le contre-outil est par exemple formé d'une barre en matériau élastomère. Ce type de coupe s'avère satisfaisant, mais le nombre de coupes possibles avec une telle lame peut s'avérer limité, notamment en raison de l'usure assez rapide du tranchant de la lame.

D'autres systèmes utilisent une lame fixe ou contre-lame, la fibre étant coupée par cisaillement lors déplacement de la lame par rapport à la contre-lame. Ces systèmes de coupe peuvent permettre un nombre plus important de coupe avant d'être remplacés. Toutefois, le montage de la lame et la contre-lame pour une coupe efficace s'avère délicat, et le moindre jeu entre la lame et la contre-lame, notamment en raison de l'usure de la lame et/ou contrelame, réduit considérablement l'efficacité de la coupe et augmente l'encrassement du système de coupe.

Le document US 4,259,144 divulgue une tête d'application de bandes composites comprenant un système de découpe.

Le but de la présente invention est de proposer une solution visant à pallier les inconvénients précités, et notamment de proposer un nouveau système de coupe simple et efficace.

A cet effet, la présente invention propose une machine, selon la revendication 1, d'application de fibres pour la réalisation de pièces en matériau composite comprenant une tête d'application de fibres comprenant un rouleau d'application pour l'application d'une fibre ou d'une bande formée de plusieurs fibres sur une surface d'application, un système de guidage pour guider une fibre ou plusieurs fibres sous la forme d'une bande vers ledit rouleau d'application, et au moins un système de coupe comprenant une lame apte à être manœuvrée par un vérin de coupe entre une position de repos et une position active pour couper une fibre, caractérisée en ce que chaque système de coupe comprend une contre-lame maintenue élastiquement en appui contre la lame par son arête de coupe, pour couper par cisaillement une fibre lors du déplacement de la lame par rapport à la contre-lame de sa position de repos vers sa position active.

Selon l'invention, le montage élastique de la contre-lame en appui contre la lame par son arête de coupe assure une position optimale dans le temps de la contre-lame par rapport à la lame, et ainsi une coupe efficace. Une position optimale entre la lame et la contre-lame est conservée notamment en cas d'usure de la contre-lame. Par ailleurs, ce montage élastique permet de supprimer les problèmes de jeu de montage entre la lame et la contre-lame des systèmes existants.

Selon un mode de réalisation, la lame comprend une lumière ou ouverture pour le passage d'une fibre, ladite ouverture définissant un bord de coupe de la lame.

Selon un mode de réalisation, ledit bord de coupe est orienté vers le vérin de coupe, la contre-lame est disposée entre ledit bord de coupe de la lame et le vérin de coupe lorsque la lame est dans sa position de repos, de sorte que la coupe s'effectue par rétractation de la tige de vérin.

Selon un mode de réalisation, la contre-lame est montée sur un levier monté pivotant autour d'un axe, de préférence perpendiculaire à la tige de vérin, ledit levier étant sollicité élastiquement par un ressort pour maintenir la contre-lame en appui contre la lame.

Selon un mode de réalisation, la lame et la contre-lame forment entre-elles un angle compris entre 1° et 4°, de préférence compris entre 2° et 3°.

Selon un mode de réalisation, la lame et/ou la contre-lame sont munies de microdentures, pour maintenir la fibre pendant la coupe.

Selon un mode de réalisation, la lame et la contre-lame sont montées sur un même support, le système de coupe peut ainsi être aisément démonté.

La présente invention a également pour objet un procédé, selon la revendication 8, de réalisation de pièces en matériau composite, comprenant le drapage de fibres sur une surface d'application, caractérisé en ce que ledit drapage est réalisé au moyen d'une machine d'application de fibres telle que décrite précédemment.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue schématique d'une machine de placement de fibres selon l'invention ;
- la figure 2 est une vue partielle agrandie de la figure 1 illustrant la tête de placement de fibres de côté ;
- la figure 3 est une vue de face de la tête de la figure 2, avec le premier rouleau de compactage en position active ;
- la figure 4 est une vue de derrière de la tête de la figure 3 ;
- la figure 5 est une vue schématique de côté du système de compactage de la tête comprenant le module support portant les deux rouleaux de compactage ;
- la figure 6 est une vue analogue à celle de la figure 3, le deuxième rouleau de compactage étant en position active ;
- la figure 7 est une vue analogue à celle de la figure 3, le module support des deux rouleaux de compactage dans une première position de maintenance, le premier module fonctionnel de la tête en position ouverte ;
- la figure 8 est une vue de côté d'un module fonctionnel ;
- la figure 9 est une vue schématique en coupe du module fonctionnel de la figure 8 ;
- la figure 10 est une vue agrandie du détail D de la figure 9, illustrant le système de coupe ;
- la figure 11 est une vue selon le plan XI-XI de la figure 10 ; et,
- la figure 12 est une vue schématique partielle en coupe de la tête.

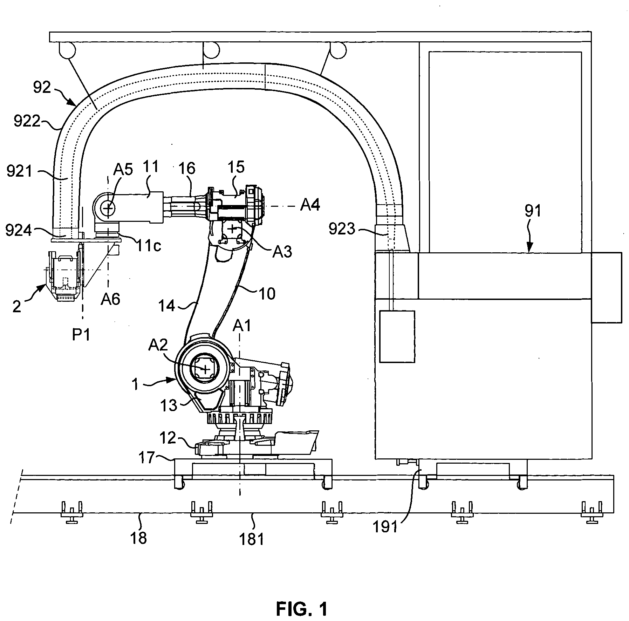

En référence à la figure 1, la machine de placement comprend un système de déplacement 1 formé d'un bras poly-articulé 10, du type robot six axes, connu en soi, monté mobile sur un axe linéaire 18, une tête d'application 2 montée au poignet d'extrémité 11 du bras poly-articulé, des moyens de stockage 91 pour le stockage de fibres, et des moyens d'acheminement 92 pour acheminer des fibres depuis lesdits moyens de stockage vers la tête.

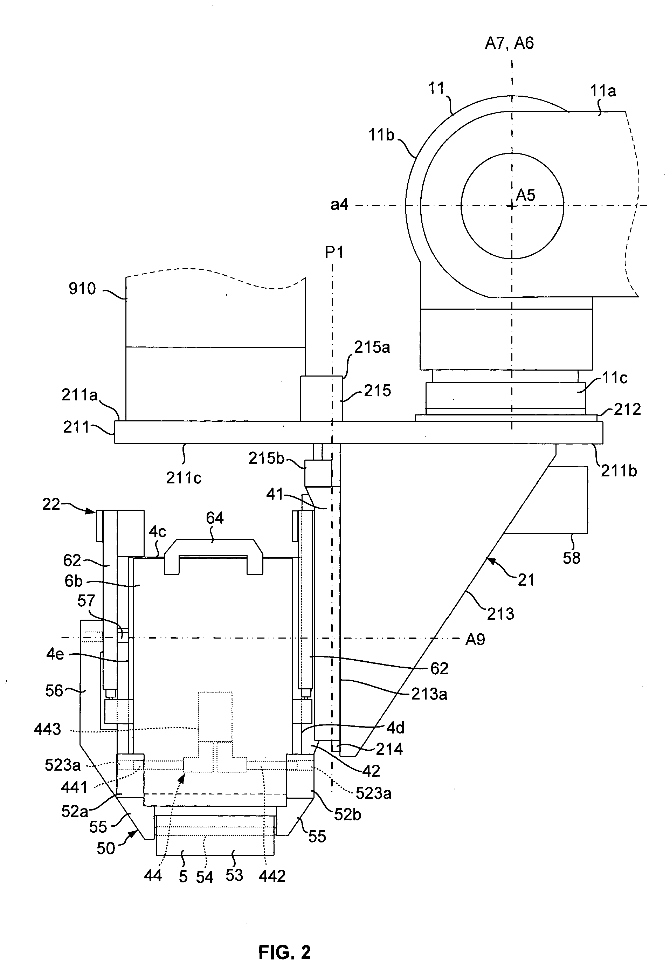

Le bras poly-articulé 10 comprend, de manière connue en soi, un premier tronçon ou embase 12, et un deuxième, troisième, quatrième et cinquième tronçons, respectivement 13, 14, 15 et 16, assemblés pivotant les uns aux autres autour d'axes de rotation A1, A2, A3 et A4, et un poignet d'extrémité 11 comprenant les trois derniers tronçons du bras. En référence à la figure 2, le poignet d'extrémité 11 comprend un premier tronçon 11a par lequel le poignet est assemblé sur le sixième tronçon 16 du bras, de sorte que le poignet soit monté rotatif autour de l'axe A4, un deuxième tronçon 11b monté pivotant sur le premier tronçon autour d'un axe A5, et un troisième tronçon 11c monté pivotant sur le deuxième tronçon autour d'un axe A6, ce troisième tronçon, ou platine d'assemblage, étant destiné à porter la tête. Le bras poly-articulé 10 est fixé par son embase 12 sur un chariot 17 monté coulissant sur l'axe linéaire 18, ledit axe linéaire étant constitué de deux rails 181 parallèles fixés au sol. Le chariot est équipé de moyens d'entraînement, par exemple de type galets motorisés, asservis par une unité de commande de la machine pour le déplacement de la tête le long de ces rails.

La machine est prévue pour l'application de fibres, par exemple de type fibres ou mèches de carbone, conditionnées sous forme de bobines. Les moyens de stockage sont formés d'un cantre 91, pour recevoir les bobines de fibres. Chaque bobine est montée sur un mandrin du cantre. Le cantre est ici monté sur un chariot suiveur 191, disposé sur les rails 191 et relié mécaniquement au chariot 17 portant le robot.

Les moyens d'acheminement comprennent ici des tubes d'acheminement flexibles équipés de lames flexibles de rigidification, tel que décrit dans le document brevet WO2012/160270. Les fibres sont acheminées individuellement dans ces tubes d'acheminement, du cantre à la tête. Les tubes sont rassemblés en un faisceau, représenté schématiquement sous les références 921 sur la figure 1, et sont placés dans le passage interne d'une gaine 922 flexible, telle que décrite dans le document brevet WO2010/049424. La gaine est assemblée par son extrémité amont et son extrémité aval, respectivement au cantre et à la tête d'application. Les tubes et la gaine présentent une longueur et une flexibilité suffisantes pour ne pas limiter les mouvements du bras poly-articulé. Les tubes d'acheminement sont fixés en extrémité, d'une part au cantre 91 par des systèmes de fixation amont, représentés schématiquement sous la référence 923, et d'autre part à la tête par des systèmes de fixation aval représentés schématiquement sous la référence 924, tel que décrit ci-après.

La tête d'application 2, appelée également tête de placement de fibres, comprend une structure support ou partie fixe 21 par laquelle la tête est montée à l'extrémité du poignet 11 du robot, et une partie mobile 22 montée mobile en translation sur la partie fixe 21 selon un plan de coulissement P1.

En référence aux figures 2, 3 et 4, la partie fixe 21 comprend une platine 211 présentant une face principale supérieure 211a et une face principale inférieure 211b. La platine est équipée sur sa face supérieure d'un système de connexion 212 permettant sa connexion à l'extrémité du poignet du robot selon un axe d'assemblage A7 qui est correspond au sixième axe A6 du robot. Deux plaques de montage fixes 213 sont montées écartées d'une de l'autre sur la face inférieure 211b de la platine pour le montage coulissant de la partie mobile 22 selon le plan P1, qui est parallèle à l'axe A7.

La partie mobile 22 comprend principalement un système de guidage 4, un système de compactage, et deux modules fonctionnels 6a, 6b, disposés de part et d'autre du système de guidage, qui intègrent les fonctions de coupe, de blocage et de réacheminement des fibres. Le système de compactage est un système à deux rouleaux, du type décrit dans le document brevet WO2014/202845, comprenant un premier rouleau 5 et un second rouleau 5', chaque rouleau est déplaçable entre une position inactive et une position active de drapage, la tête utilisant l'un ou l'autre des rouleaux en position active pour draper.

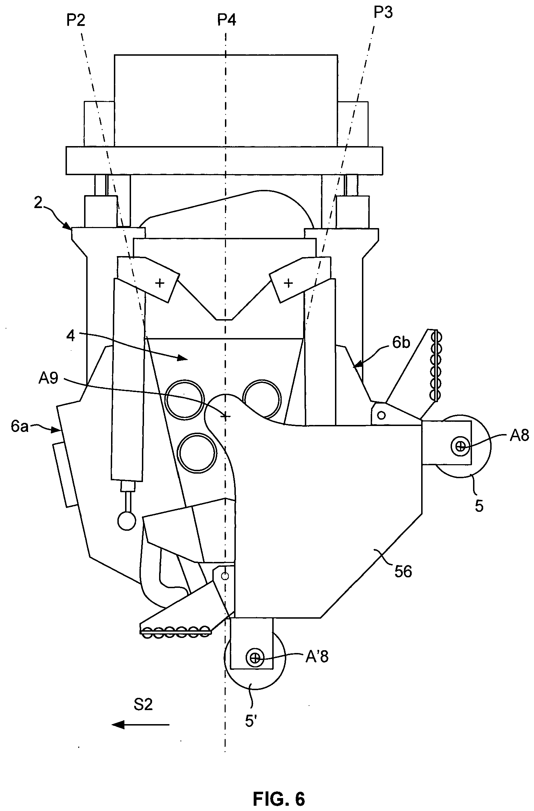

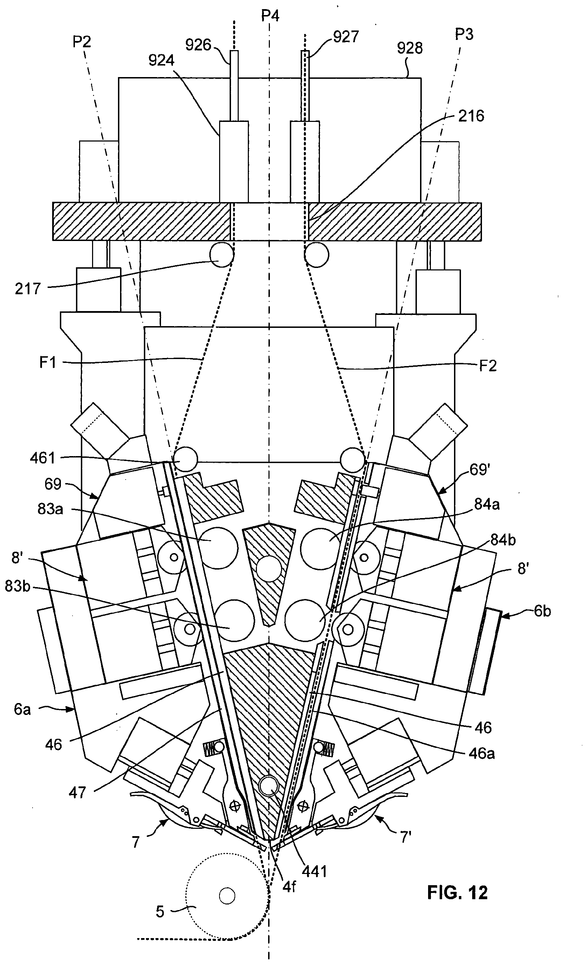

Le système de guidage 4 permet de guider les fibres entrant dans la tête en direction d'un rouleau en position active sous la forme de deux nappes de fibres F1 et F2 (Fig 12), pour former une bande de fibres dans laquelle les fibres sont disposées sensiblement bord à bord. Le système de guidage 4 comprend une pièce centrale 40, en forme de coin, de section globalement triangulaire, présentant une première et une deuxième faces latérales 4a, 4b définissant deux plans de guidage P2, P3, se rapprochant l'un de l'autre d'amont en aval, une face supérieure 4c opposée au rouleau en position active, et une face arrière 4d et une face avant 4e sensiblement parallèles. Le premier module fonctionnel 6a et le second module fonctionnel 6b viennent respectivement à plat par une face principale 60a (Fig 6) contre les première et deuxième faces principales 4a, 4b de la pièce centrale, et forment à leur interface d'assemblage des premiers et des seconds canaux de guidage, respectivement pour le guidage des fibres de la première nappe et de la deuxième nappe.

A titre d'exemple, en référence à la figure 12, chaque face principale 4a, 4b de la pièce centrale est équipée d'une plaque de guidage, dite intérieure 4 6rainurée, munie de rainures 46a, et chaque face principale d'un module fonctionnel est équipée d'une plaque de guidage extérieure 47, la plaque de guidage extérieure venant à plat contre la plaque intérieure pour fermer les rainures et ainsi former les canaux de guidage. De préférence, la plaque de guidage extérieure présente des nervures s'insérant dans les rainures de la plaque de guidage intérieure pour former les canaux de guidage. Les premiers canaux et les seconds canaux sont disposés en quinconce, selon deux plans P2, P3 de guidage se rapprochant l'un de l'autre d'amont en aval, de sorte que les fibres F1 et F2 des deux nappes soient sensiblement disposées bord à bord au niveau du rouleau d'application qui est en position active. Les plans P2, P3 de guidage sont disposés symétriquement de part et d'autre du plan P4 médian de symétrie du système de guidage.

Dans le présent mode de réalisation, la tête est par exemple prévue pour l'application de bandes de vingt-quatre fibres, chaque nappe comprenant 12 fibres, le système de guidage principal comprenant douze premiers canaux de guidage et douze seconds canaux de guidage.

Le montage coulissant de la partie mobile 22 sur la partie fixe 21 est réalisé via deux montants 41 support, chaque montant étant assemblé coulissant sur le bord avant 213a d'une plaque de montage. Pour ce faire, le bord avant de chaque plaque de montage est équipée d'un rail 214, et chaque montant support 41 est équipé de deux chariots (non représentés) venant se monter coulissant sur un rail. La pièce centrale 40 est assemblée par sa face arrière 4d à la face avant d'une première plaque support 42 qui est assemblée aux deux montants support 41. Le montage est réalisé de sorte que l'axe d'assemblage A7 soit contenu dans le plan médian P4 du système de guidage 4. La pièce centrale 40 est disposée du côté du plan de coulissement qui est opposé à l'axe d'assemblage A7, son plan médian P4 étant perpendiculaire au plan de coulissement P1.

Chaque montant support 41 est relié à la platine 211 par un vérin de compactage 215, les vérins définissant la force de compactage avec laquelle les fibres sont appliquées sur le moule via l'un des rouleaux. Chaque vérin 215 est monté par son corps 215a de vérin sur la platine 211, et sa tige 215b s'étend parallèlement au plan de coulissement P1 et est assemblée à l'extrémité supérieure d'un montant support 41. Les vérins sollicitent la partie mobile dans la direction opposée à la platine, soit verticalement vers le bas dans la configuration de la figure 2. Les vérins de compactage, par exemple de type pneumatique, sont commandés en pression pour adapter la force de compactage.

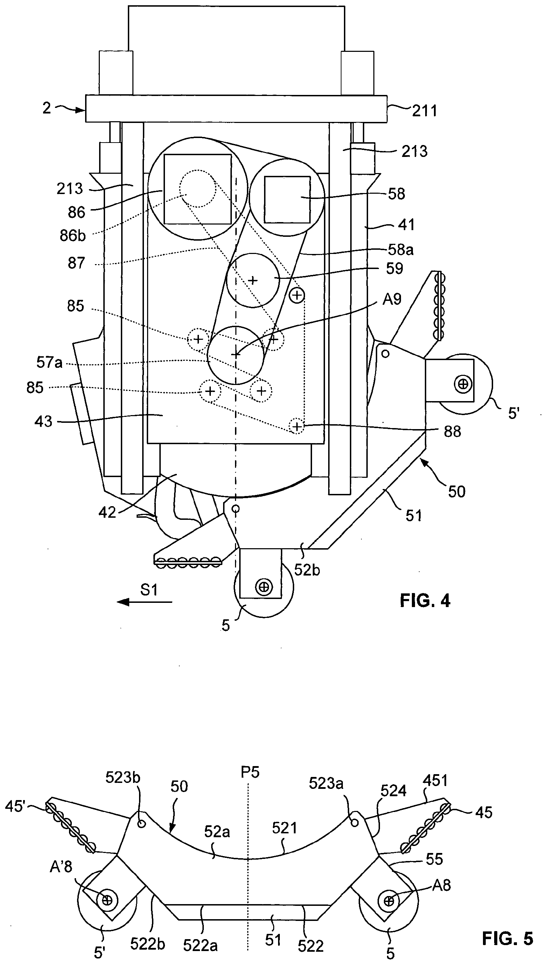

En référence aux figures 2 et 5, les deux rouleaux de compactage 5, 5' du système de compactage sont montés sur un même module support 50. Le module support 50 présente une section générale en U avec une base ou partie centrale 51 et deux barres ou parois latérales 52a, 52b. La base 51 se présente sous la forme d'une plaque sensiblement rectangulaire. Chaque paroi latérale 52a, 52b se présente sous la forme d'une plaque avec un bord supérieur 521 concave et un bord inférieur 522 ayant une portion centrale 522a rectiligne se prolongeant de chaque côté par une portion d'extrémité 522b rectiligne, disposée à 45° de la portion centrale, les deux portions d'extrémité étant disposées symétriquement de part et d'autre du plan symétrie P5 du module support et formant entre elles un angle de 90°. La base 52 est fixée aux portions centrales 522a des bords inférieurs des deux parois latérales. Les rouleaux 5, 5' sont montés entre les deux parois latérales, sur les portions d'extrémités 522b, autour d'axes de rotation A8, A8', lesdits axes étant disposés symétriquement de part et d'autre du plan de symétrie P5. Les deux parois latérales sont assemblées rigidement à la base. En variante les parois latérales et la base sont formées d'une seule pièce monobloc.

Chaque rouleau 5, 5' est par exemple un rouleau souple comprenant un cylindre en matériau élastomère 53 monté sur une tige 54 axiale rigide. Chaque rouleau est monté rotatif autour de son axe A8, A'8 de rotation par les extrémités de sa tige axiale entre deux pièces d'assemblage 55, par exemple formant paliers, par lesquelles ledit rouleau est monté de manière amovible via des moyens d'assemblage aux deux parois latérales 52a, 52b, au niveau des portions d'extrémité 522b. Lesdits moyens d'assemblage sont par exemple de type pneumatique, magnétique ou mécanique.

Le module support 50 est monté rotatif sur la partie mobile 22 de la tête au moyen d'un bras 56, monté rotatif sur la face avant de la pièce centrale autour d'un axe de pivotement A9 inclus dans le plan P4, et assemblé à la paroi latérale 52a, dite avant, du module support. Le bras 56 est fixé à l'extrémité avant d'une tige axiale 57 (Fig 2) montée rotative sur la pièce centrale 40. Les parois latérales du module support sont disposées de part et d'autre de la pièce centrale, la paroi latérale arrière 52b passant sous le bord inférieur convexe de la première plaque support 42. Le bras est apte à pivoter autour de l'axe A9 de pivotement pour déplacer le module support entre deux positions, une première position du module support, dans laquelle le second rouleau est en position inactive et le premier rouleau 5 est en position active pour draper dans une première direction S1, tel qu'illustré à la figure 4, et une deuxième position du module support, dans laquelle le premier rouleau 5 est en position inactive et le second rouleau 5' en position active pour draper dans une deuxième direction S2, opposée à la première direction.

Le bras 56 est fixé sur une grande partie de la longueur de la paroi latérale avant du module support, sa section se réduisant en direction de son axe de pivotement.

Le module support est manœuvré entre ses deux positions par un système d'actionnement comprenant un moteur 58 agissant sur la tige axiale 57 du bras. En référence à la figure 4, le moteur 58 est monté, entre les deux plaques de montage 213, sur une seconde plaque support 43 assemblée sur les bords arrière des deux montants support 41. La tige axiale 57 (Fig.2) traverse la première et seconde plaque support 42, 43, et son extrémité arrière est équipée d'un pignon 57a. L'entraînement en rotation de la tige axiale est assuré par le moteur 58 via une courroie 58a montée sur un pignon de l'arbre d'entraînement du moteur 58 et le pignon 57a de la tige, un galet tendeur 59 maintenant la courroie tendue.

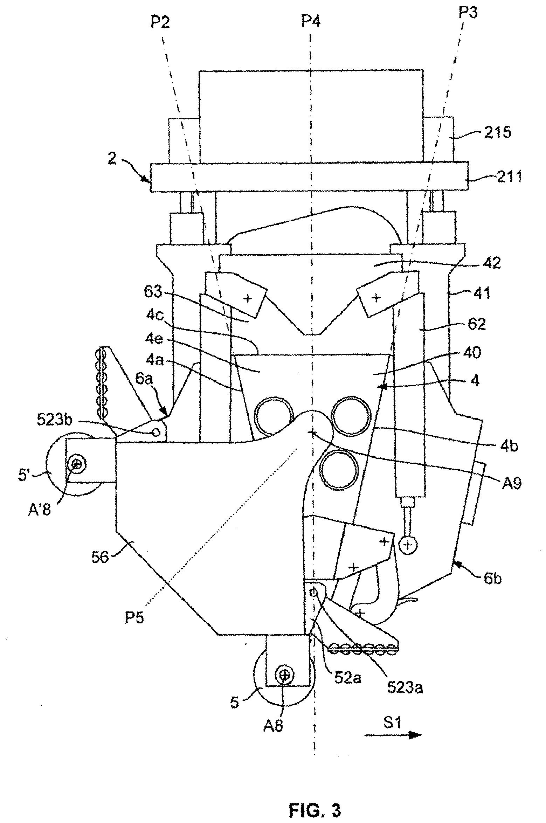

Dans la position active du premier rouleau illustrée à la figure 3, les fibres sortant du système de guidage sont guidées vers le côté droit du premier rouleau 5 pour permettre le drapage des fibres avec ce premier rouleau dans la direction S1. L'axe A8 du premier rouleau est positionné en dessous du système de guidage, et à gauche du plan P4 de symétrie. Le plan P4 est par exemple sensiblement tangent à la surface cylindrique du premier rouleau en position active. Le second rouleau est en position inactive. Les portions d'extrémité 522b des parois latérales, qui définissent les plans d'assemblage des pièces d'assemblage du premier rouleau, sont disposées perpendiculairement au plan de coulissement, garantissant une bonne reprise par le module support des efforts de compactage transmis par le rouleau. Le second rouleau 5' est amené en position active et le premier rouleau en position inactive par rotation de 90° du bras autour de l'axe A9, dans le sens anti-horaire sur la figure 3, au moyen du moteur 58.

Dans la position active du second rouleau illustrée à la figure 6, les fibres sortant du système de guidage sont guidées vers le côté gauche du second rouleau 5' pour permettre le drapage des fibres avec ce premier rouleau dans la direction S2. L'axe A'8 du second rouleau est positionné en dessous du système de guidage, et à droite du plan P4 de symétrie. Le plan P4 est sensiblement tangent à la surface cylindrique du second rouleau en position active. Les portions d'extrémité 522b des parois latérales, qui définissent les plans d'assemblage des pièces d'assemblage du second rouleau, sont disposées perpendiculairement au plan de coulissement, garantissant une bonne reprise des efforts de compactage par le module support. Lors de la manœuvre du module support entre ses deux positions, la base du module support passe sous le bord aval 4f de la pièce centrale.

Des moyens de blocage 44, illustrés de manière schématique sur la figure 2, sont prévus pour assurer le blocage du module support dans ses première et deuxième positions. Ces moyens de blocage comprennent deux tiges de blocage 441, 442, montées coulissante dans la pièce centrale et dont les axes sont disposés dans le plan P4 de symétrie. Les tiges de blocage sont aptes à être manœuvrées par un système d'actionnement 443 entre une position rétractée dans laquelle les tiges de blocage sont disposées dans la pièce centrale, à distance des parois latérales du module support, et une position active déployée dans laquelle les tiges de blocage sont en saillie par rapport aux faces avant et arrière 4d, 4^{e} de la pièce centrale et viennent s'insérer dans des renfoncements ou ouvertures des parois latérales du module support pour bloquer en rotation le module support.

Suivant la figure 5, les parois latérales 52a, 52b présentent chacune un premier renfoncement 523a et un second renfoncement 523b disposées symétriquement de part et d'autre du plan P5 et parallèlement à ce dernier. Lorsque le module support est disposé dans sa première position, dans laquelle le premier rouleau est en position active, les premiers renfoncements sont centrés selon le plan P4. Les tiges de blocage sont manœuvrées vers leur position active, une première tige 441 de blocage s'insère dans le premier renfoncement 523a de la paroi latérale 52a avant, et la deuxième tige de blocage 442 s'insère dans le premier renfoncement 523a de la paroi latérale arrière 52b, tel qu'illustré à la figure 2. Les tiges assurent le blocage en rotation du module support dans sa première position et garantissent ainsi le maintien du premier rouleau dans sa position active. Par ailleurs, les tiges de blocage évitent que la tige axiale 57 reprenne l'ensemble des efforts de compactage, et protègent ainsi la tige axiale et le moteur 58. Dans la deuxième position du module support, les seconds renfoncements 523b sont centrés selon le plan P4, une première tige 441 de blocage s'insère dans le second renfoncement 523b de la paroi latérale 52a avant, et la deuxième tige de blocage 442 s'insère dans le second renfoncement 523b de la paroi latérale arrière 52b. Le système d'actionnement 443 est par exemple un système de vérin à pinces parallèles, chaque tige 441, 442 étant assemblée à une pince. Avantageusement, les plots de blocage présentent une partie d'extrémité conique venant s'insérer dans premiers et seconds renfoncements de forme conique complémentaire.

Chaque rouleau peut avantageusement être équipé d'un système de guidage additionnel (non représenté), tel que décrit dans le document brevet WO2014/202845, pour guider au plus près du rouleau les fibres sortant du système de guidage 4. Le système de guidage additionnel est par exemple monté entre les deux pièces d'assemblage 55, les deux systèmes de guidage additionnels étant disposés symétriquement de part et d'autre du plan P5, du côté extérieur des rouleaux.

Le module support est en outre équipé d'un système de chauffage apte à émettre un rayonnement thermique en direction de la bande de fibres avant son compactage et/ou en direction du moule ou des bandes de fibres déjà appliquées en amont du rouleau en position active. Ce système de chauffage permet d'au moins ramollir la résine de pré-imprégnation, dans le cas de fibres pré-imprégnées, ou le liant dans le cas de fibres sèches, et ainsi favoriser l'adhésion des bandes entre elles. Le système de chauffage comprend un premier ensemble de lampes infrarouge 45 associé au premier rouleau, qui est utilisé lorsque la tête drape avec le premier rouleau dans la première direction S1, et un deuxième ensemble de lampes infrarouge 45', associé au deuxième rouleau, qui est utilisé lorsque la tête drape avec le second rouleau dans la deuxième direction S1. Les ensembles sont assemblés entre deux supports 451 qui sont montés sur les bords latéraux 524 des deux parois latérales 52.

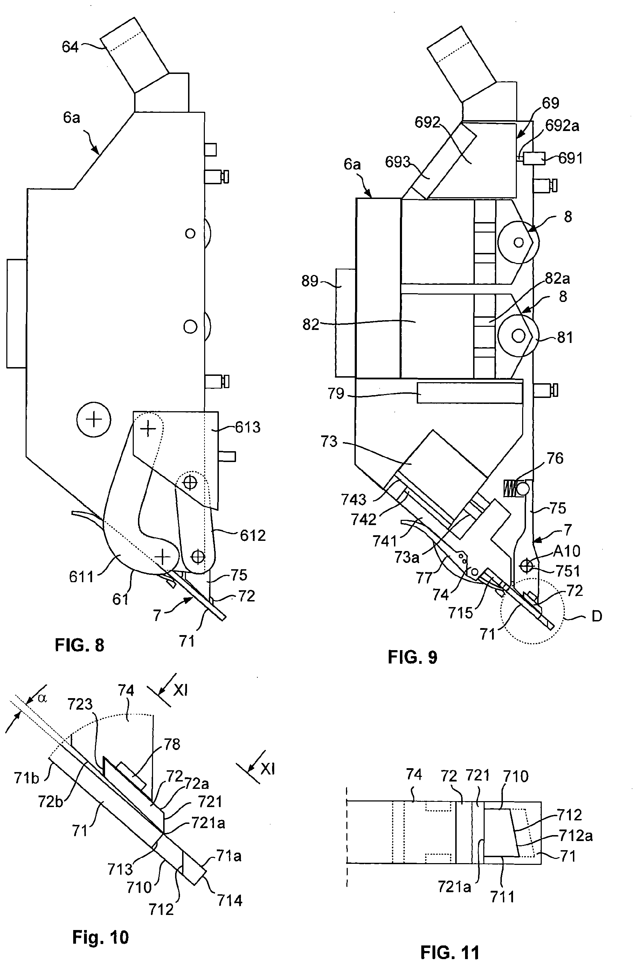

En référence aux figures 8 et 9, le premier module fonctionnel 6a comprend pour chaque fibre de la première nappe un système de coupe 7, un système de réacheminement 8, et un système de blocage 69.

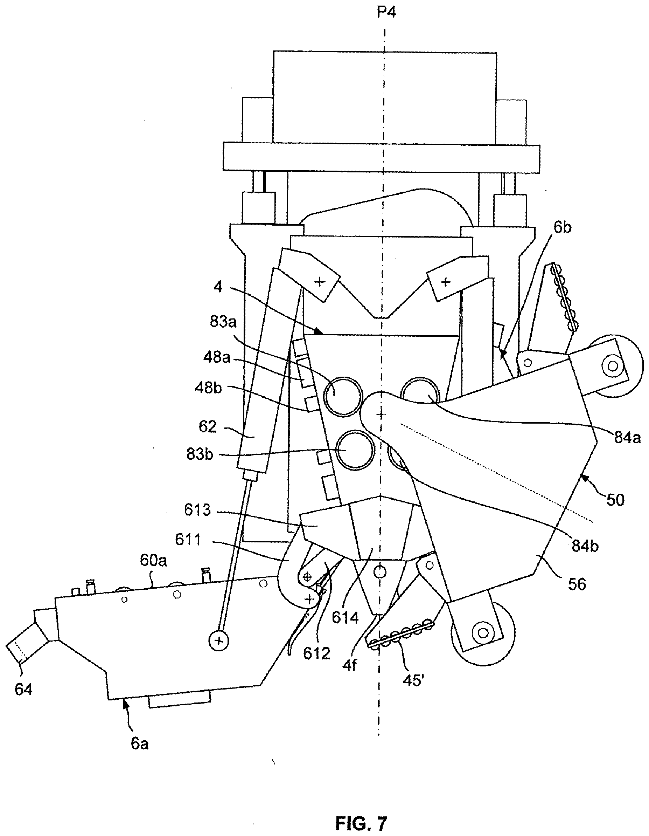

Le module fonctionnel comprend des éléments supports sur lesquels sont montés les différents composants des systèmes précités. Le module support est monté mobile sur la pièce centrale via un système d'articulation 61 (Fig. 7) entre une position fermée active et une position ouverte dite de maintenance, tel que décrit ci-après.

Chaque système de coupe 7 comprend une lame 71 mobile métallique, et une lame fixe métallique, également appelée contre-lame 72, la lame 71 étant manœuvrée par un vérin de coupe 73 pneumatique entre une position déployée de repos et une position active de coupe pour couper une fibre de la première nappe.

En référence aux figures 9, 10 et 11, la lame 71 est formée d'une plaque plane rectangulaire présentant deux faces principales parallèles, appelées face intérieure 71a, et face extérieure 71b. La lame est montée fixe, de manière amovible, en porte à faux sur un support 74 de lame par sa partie proximale 715 de montage, le support de lame étant assemblé à l'extrémité de la tige 73a du vérin de coupe 73. La lame est munie, du côté de son extrémité distale 714, d'une lumière ouverture 710 traversante pour le passage d'une fibre, débouchant sur chaque face principale. Ladite ouverture forme deux bords latéraux 711, un bord avant 712 opposé au vérin, disposé du côté de l'extrémité distale 714, et un bord arrière 713. Le bord avant est biseauté et constitue le bord de coupe de la lame, le biseau étant formé du côté de la face extérieure 71b.

La contre-lame 72 se présente sous la forme d'une plaque plane rectangulaire présentant une face principale intérieure 72a, une face principale extérieure 72b, et un bord avant biseauté, formant le bord de coupe 721 de la contre-lame, le biseau étant formé du côté de la face intérieure 72a. La largeur de la contre-lame correspond sensiblement à celle de la lame. La contre-lame est montée élastiquement en appui contre la surface intérieure de la lame de sorte que la contre-lame soit en appui linéaire par son arête de coupe 721a, également appelé fil ou tranchant, contre la lame. Pour ce montage, un levier 75 est monté pivotant sur le module fonctionnel autour d'un axe A10, l'axe de pivotement définissant un premier bras et un second bras de levier. La contre-lame est montée à l'extrémité du premier bras. Un ressort 76 de compression monté dans un logement du module fonctionnel agit sur le deuxième bras pour solliciter la contre-lame en appui contre la lame, le ressort sollicitant le levier dans le sens horaire sur la figure 9. La contre-lame forme un angle α avec la lame, par exemple d'environ 2°.

Dans la position déployée illustrée à la figure 9, la contre-lame est disposée contre la lame de sorte que son tranchant 721a soit positionnée au niveau de, ou au au-delà du bord arrière 713 par rapport au bord de coupe 712, par exemple au niveau dudit bord arrière. La manœuvre par le vérin de coupe de la lame de sa position déployée vers sa position rétractée permet la coupe par cisaillement d'une fibre passant dans l'ouverture. Dans la position rétractée, le tranchant 721a de la contre-lame est positionné entre le tranchant 712a de la lame et l'extrémité distale 714 de la lame. Tel qu'illustrée sur la figure 11, le bord de coupe 712 de la lame est avantageusement inclinée pour couper progressivement la fibre et réduire l'effort de coupe.

Selon une variante de réalisation, le bord de coupe 721 de la contre-lame est munie de micro-dentures, permettant de maintenir la fibre lors de la coupe afin d'éviter un déplacement latéral de la fibre lors de la coupe.

Pour assurer un bon guidage du mouvement en translation de la lame entre ses deux positions, le support 74 présente une branche 741 équipée d'une glissière 742 montée coulissante sur un rail 743 fixé au corps du vérin 73, parallèlement à la tige 73a de vérin.

La lame 71 est assemblée de manière amovible sur le support 74 de lame par des moyens de verrouillage rapide 77, tels que des verrous à levier de type grenouillères.

La contre-lame 72 est assemblée sur le levier 75 via des moyens d'assemblage 78 de type magnétique, tel qu'un aimant logé dans le bras de levier. La contre-lame présente avantageusement des échancrures dans lesquels viennent se positionner des ergots du bras de levier afin d'assurer un bon positionnement de la contre lame sur le levier. Selon un autre mode de réalisation, la contre-lame est assemblée par des moyens d'assemblage de type mécanique, par exemple au moyen d'une ou plusieurs vis. La contre-lame présente avantageusement un deuxième bord de coupe 723 sur son bord opposé au premier bord de coupe 721. La contre-lame peut alors être montée en sens inverse sur le levier pour utiliser ce deuxième bord de coupe lorsque le premier bord de coupe est usé.

Les systèmes de coupe sont montés côte à côte sur le premier module fonctionnel, un système de coupe étant prévu pour chaque fibre de la première nappe. Les leviers 75 des systèmes de coupe sont montés rotatifs indépendamment les uns des autres sur une même tige axiale 751, chaque levier étant sollicité par son propre ressort.

Dans la position fermée active du module fonctionnel illustré notamment à la figure 12, les ouvertures 710 des lames sont disposées sous la pièce centrale 40 sous le bord aval 4f, en vis-à-vis des canaux de guidage. Les tiges des vérins de coupe qui sont parallèles aux lames de coupe, forment un angle inférieur à 90° par rapport au plan de guidage P2, par exemple de l'ordre de 45°.

Chaque système de réacheminement 8 du premier module fonctionnel comprend un contre-galet 81 monté libre en rotation à l'extrémité de la tige d'un vérin 82a de réacheminement pneumatique 82 via une chape. Le vérin est apte à déplacer le contre-galet entre une position inactive écartée et une position active dans laquelle le contre-galet vient plaquer une fibre contre un premier rouleau d'entraînement monté sur la pièce centrale 40. En référence à la figure 12, les contre-galets du module fonctionnel sont montés en amont des systèmes de coupe par rapport au sens de défilement des fibres, chaque contre-galet étant centré selon un canal de guidage de la première nappe dans la position fermée du module fonctionnel. Pour des raisons d'encombrement des contre-galets, les contre-galets sont disposés ici en deux rangées superposées, de sorte que les tiges de vérin soient disposées sensiblement perpendiculairement au plan de guidage P2. Les contre-galets d'une première rangée coopèrent avec un premier rouleau d'entraînement 83a, les contre-galets de la deuxième rangée, disposée entre la première rangée et les systèmes de coupe, coopérant avec un autre premier rouleau d'entraînement 83b. Les contre-galets et les rouleaux d'entraînement 83a, 83b sont disposés au niveau d'ouvertures traversantes respectivement de la plaque de guidage extérieure et de la plaque de guidage intérieure. Un contre-galet est prévu pour chaque fibre de la première nappe, deux fibres adjacentes de la première nappe étant réacheminées par des contre-galets de rangées différentes.

Chaque système de blocage 69 comprend un plot de blocage 691 monté à l'extrémité de la tige 692a d'un vérin de blocage 692. Le plot présente une partie distale cylindrique, définissant une surface d'appui plane perpendiculaire à la tige de vérin. Le plot passe dans une ouverture de la plaque de guidage extérieure. Le module fonctionnel comprend un système de blocage pour chaque fibre de la première nappe Les systèmes de blocage sont disposés côte à côte en une rangée, en amont des systèmes de réacheminement, de sorte les tiges soient centrées selon les premiers canaux, sensiblement perpendiculairement au premier plan de guidage P2. Le vérin est apte à déplacer le plot entre une position inactive et une position active pour bloquer une fibre. En position inactive, le plot est écarté du canal de guidage auquel il est associé. Lors de son déplacement vers la position active, le plot vient en butée par sa surface d'appui contre un contre-outil, et pince la fibre. Les contre-outils des systèmes de blocage sont formés par exemple d'une même barre métallique logée dans un renfoncement de la plaque de guidage intérieure.

Le deuxième module fonctionnel 6b pour la deuxième nappe de fibres F2 est identique au premier module fonctionnel, et comprend, en référence à la figure 12, des systèmes de coupe 7', des systèmes de réacheminement 8' et des systèmes de blocage 69'. Dans sa position fermée active, le deuxième module fonctionnel vient à plat par sa surface principale contre la deuxième face latérale 4a de la pièce centrale. La pièce centrale est équipée de deux deuxièmes rouleaux d'entraînement 84a, 84b pour coopérer avec les contre-galets de réacheminement des systèmes de réacheminement du deuxième module fonctionnel. Les premiers et deuxièmes rouleaux sont positionnés symétriquement de part et d'autre du plan P4. Les quatre rouleaux d'entraînement 83a, 83b, 84a, 84b sont entraînés en rotation via une courroie par un seul moteur. Les rouleaux d'entraînement sont montés rotatif dans des alésages de la pièce centrale autour d'axes de rotation parallèles au plan P4. Les rouleaux d'entraînement sont montés sur la pièce centrale 40, de manière démontable, par la face avant 4e de la pièce centrale. L'extrémité arrière de chaque rouleau traverse la première plaque support 42 et est munie de moyens d'accouplement aptes à coopérer avec des moyens d'accouplement complémentaires montés sur un pignon 85 monté rotatif sur la deuxième plaque support 43. Ces moyens d'accouplement permettent un accouplement automatique, sensiblement sans jeu, de chaque rouleau d'entraînement avec son pignon associé, lorsque le rouleau d'entraînement est inséré dans la pièce centrale par la face avant. En référence à la figure 4, les quatre pignons 85 des rouleaux de réacheminement sont disposés entre la première plaque support 42 et la deuxième plaque support 43. Un moteur de réacheminement 86 est monté sur la face arrière de la deuxième plaque support, son arbre d'entraînement traversant ladite deuxième plaque et étant équipé d'un pignon 86b. Une courroie crantée 87 est montée sur le pignon 86b du moteur, les quatre pignons 85, ainsi que sur des poulies de renvoi 88, de sorte que, en référence à la disposition de la figure 7, les premiers rouleaux d'entraînement 83a, 83b pour le premier module fonctionnel soient entraînés en rotation dans le sens anti-horaire, et les deuxièmes rouleaux d'entraînement 84a, 84b pour le deuxième module fonctionnel soient entraînés en rotation dans le sens horaire. Le moteur d'entraînement 86 est piloté par l'unité de commande de la machine pour entraîner les rouleaux, par exemple de sorte que la vitesse périphérique desdits rouleaux corresponde à la vitesse du point central de l'outil, ou TCP, défini comme étant le milieu de la ligne d'intersection entre la surface du rouleau de compactage en position active et la surface de drapage.

Pour accéder aux extrémités avant des premiers rouleaux, et notamment dégager le bras 56, le support mobile est amené dans sa deuxième position. Le support mobile est amené dans sa première position pour accéder aux deuxièmes rouleaux d'entraînement.

Chaque module fonctionnel est monté mobile sur la pièce centrale via deux systèmes d'articulation 61, un premier système d'articulation est monté entre une première face latérale avant du module fonctionnel et la face avant 4e de la pièce centrale, le second système d'articulation étant monté entre la deuxième face latérale du module fonctionnel et la face arrière 4d de la pièce centrale. En référence aux figures 7 et 8, chaque système d'articulation est du type à mouvements combinés de rotation et de translation, comprenant un système à double biellettes, les biellettes 611, 612 étant assemblées pivotantes d'un côté à une face latérale du module, et de l'autre côté à une pièce d'assemblage 613 qui vient s'assembler de manière démontable à une pièce d'assemblage complémentaire 614 montée sur l'une des faces avant et arrière de la pièce principale.

Les systèmes d'articulation permettent la manœuvre du module entre une position fermée active, tel qu'illustré par exemple en figures 6 et 12, dans laquelle la face principale 60a munie de la plaque de guidage extérieure est plaquée contre la face latérale de la pièce centrale équipée de sa plaque de guidage intérieure, et une position ouverte de maintenance illustrée à la figure 7, dans laquelle la face principale 60a est écartée de la pièce centrale, et est disposé à environ 70-110° de la face latérale. Sur les figures 7 à 9, le premier module fonctionnel est représenté sans sa plaque de guidage extérieure. Le module est amené en position ouverte de maintenance pour réaliser des opérations de maintenance sur le module fonctionnel, ainsi que sur la plaque de guidage et/ou les rouleaux d'entraînement.

Pour chaque module fonctionnel, les vérins de coupe 73, les vérins de réacheminement 82 et les vérins de blocage 692 sont connectés à des distributeurs pneumatiques formés d'électrovanne, représentées schématiquement sous les références 79, 89 et 693, montées sur le module fonctionnel, et asservis par une unité de commande de la tête. L'alimentation pneumatique des vérins est réalisée lorsque le module est en position fermée. Les entrées et sorties des électrovannes sont reliées par des conduits (non représentés), respectivement aux chambres des vérins et à des systèmes de connexion disposés sur la face principale du module, de part et d'autre des contre-galets et des plots de blocage. Lorsque le module est en position fermée, ces systèmes de connexion sont aptes à se connecter de manière étanche à des systèmes de connexion complémentaires 48a, 48b disposés sur la face principale de la pièce centrale et connectés à des conduits d'alimentation en air comprimé. Lors de la fermeture du module, les systèmes d'articulation assure un mouvement final de translation permettant la connexion pneumatique.

Chaque module fonctionnel peut en outre être équipé sur sa face principale ou en partie haute du module d'un système de connexion électrique apte à coopérer avec des systèmes de connexion électrique complémentaires sur la pièce centrale pour une connexion électrique automatique des électrovannes, ainsi que d'autres éventuels équipements montés sur le module, lorsque le module fonctionnel est amené en position fermée.

Pour faciliter la manœuvre de chaque module fonctionnel entre ses deux positions, deux vérins d'assistance 62 sont montés pivotant entre la pièce centrale 40 et le module fonctionnel. Côté pièce centrale, le vérin est monté pivotant par son corps de vérin à une plaque support 63 montée sur la face supérieure de la pièce centrale. Par ailleurs, chaque module fonctionnel est avantageusement équipé d'une poignée 64 pour faciliter sa manœuvre entre ses deux positions. Des moyens de blocages sont prévus pour bloquer chaque module dans sa position fermée

Pour décaler le deuxième ensemble de lampes infrarouge 45' et permettre la manœuvre du module fonctionnel vers sa position ouverte, le support mobile 50 est déplacé au préalable vers une première position de maintenance illustrée à la figure 6, dans laquelle le module support est davantage décalée vers la droite, le bras effectuant une rotation supplémentaire dans le sens anti-horaire, par exemple d'environ 15-30° par rapport à la deuxième position du module dans laquelle le second rouleau est en position active. Le module support est également déplaçable dans une deuxième position de maintenance, dans laquelle le module support est disposé du côté du premier module fonctionnel, dans une position symétrique à celle du module support en première position de maintenance. Le module support 50 est amené dans cette deuxième position de maintenance pour réaliser des opérations de maintenance sur le deuxième module fonctionnel en position ouverte, ainsi que sur la plaque de guidage et/ou les rouleaux d'entraînement. Selon un autre mode de réalisation, les ensembles de lampes infrarouges 45, 45' sont montés pivotants les modules fonctionnels, autour d'un axe par entre une position active illustrée sur les figures et une position écartée, dans laquelle les lampes sont écartées de la pièce centrale pour permettre la manœuvre des modules fonctionnels entre leurs deux positions lorsque le module support est dans ses première et deuxième positions. Chaque ensemble de lampes I est par exemple monté pivotant sur un bord latéral 524 de la paroi latérale 52a avant autour d'un axe parallèle audit bord latéral.

En référence aux figures 2 et 12, la platine présente une partie 211c s'étendant au-delà du plan de coulissement P1, au-dessus de la partie mobile 22 de la tête. Les tubes d'acheminement 926, 927 sont montés via les systèmes de fixation aval 925, par exemple sous la forme de cassettes, sur la face supérieure 211a de cette partie 211c de platine, en deux rangées parallèles au plan P4, une première rangée de tubes 926 pour amener dans la tête les fibres F1 de la première nappe, et une deuxième rangée de tubes 927 pour amener dans la tête les fibres F2 de la deuxième nappe. La gaine 922 est fixée en extrémité à une pièce de montage 928 cylindrique qui est fixée sur la face supérieure de la platine. En sortie de tubes, chaque fibre passe dans une ouverture centrale 216 de la platine, puis sur deux galets afin d'être écartée du plan P4 et d'être guidée dans les canaux de guidage selon les plans P1 et P2. Chaque fibre passe sur un premier galet 217 monté rotatif sur la platine, sous la face inférieure de cette dernière, puis sur un second galet 461 monté sur la pièce centrale 40 pour orienter la fibre dans son canal de guidage. Une paire de premier galet et second galet est prévue pour chaque fibre. Avantageusement, les galets 461 pour une nappe de fibre sont montés sur un support solidaire de la plaque de guidage intérieure associée à ladite nappe.

Le premier module et le second module sont identiques et interchangeables. Pour les opérations de calibration des systèmes de coupe, de réacheminement et de blocage, chaque module fonctionnel peut être démonté de la tête, et monté sur un banc de calibration.

Les plaques de guidage intérieures comprennent avantageusement deux barres transversales, l'une disposée en partie supérieure et l'autre en partie inférieure, pour maintenir les fibres sur lesdites plaques lorsque les modules fonctionnels sont amenés en position ouverte, et assurer le bon positionnement des fibres lors de la fermeture des modules fonctionnels.

Selon une variante de réalisation, pour garantir la précision et la robustesse du montage pivotant du module support, un second bras courbé est assemblé à la paroi latérale arrière 525 du module support, ledit second bras est courbé pour contourner les plaques de montage 213 et venir se monter sur l'extrémité arrière de la tige axiale 57.

La machine comprend une unité de commande (non représentée) pour commander les déplacements du robot selon des séquences programmées, ainsi que la tête de placement de fibres, notamment les électrovannes des vérins de coupe, des vérins de réacheminement, et des vérins de blocage, le vérin de commande des tiges 441, 442 pour le blocage du module support, le moteur des rouleaux d'entraînement, et le moteur pour le pivotement du module support.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications.

## Revendications

1. Machine d'application de fibres pour la réalisation de pièces en matériau composite comprenant une tête d'application de fibres comprenant
- un rouleau (5, 5') d'application,
- un système de guidage (4) pour guider une fibre ou plusieurs fibres (F1, F2) sous la forme d'une bande vers ledit rouleau d'application, et
- au moins un système de coupe (7) comprenant une lame (71) apte à être manœuvrée par un vérin (73) de coupe entre une position de repos et une position active pour couper une fibre,
chaque système de coupe (7) comprenant une contre-lame (72) maintenue élastiquement en appui contre la lame (71) par son arête de coupe (721a), pour couper par cisaillement une fibre lors du déplacement de la lame (71) de sa position de repos vers sa position active.

2. Machine selon la revendication 1, **caractérisée en ce que** la lame (71) comprend une ouverture (710) pour le passage d'une fibre, ladite ouverture définissant un bord de coupe (712).

3. Machine selon la revendication 2, **caractérisée en ce que** la contre-lame est disposée entre ledit bord de coupe (712) de la lame et le vérin de coupe (73) lorsque la lame est dans sa position de repos, de sorte que la coupe s'effectue par rétractation de la tige de vérin.

4. Machine selon l'une des revendications 1 à 3, **caractérisée en ce que** la contre-lame (71) est montée sur un levier (75) monté pivotant autour d'un axe (A10), ledit levier étant sollicité élastiquement par un ressort (76) pour maintenir la contre-lame en appui contre la lame (71).

5. Machine selon l'une des revendications 1 à 4, **caractérisée en ce que** la lame (71) et la contre-lame (72) forment entre elles un angle (α) compris entre 1° et 4°, de préférence compris entre 2° et 3°.

6. Machine selon l'une des revendications 1 à 5, **caractérisée en ce que** la lame et/ou la contre-lame sont munies de microdentures.

7. Machine selon l'une des revendications 1 à 6, **caractérisée en ce que** la lame (71) et la contre-lame (72) sont montées sur un même support (6a, 6b).

8. Procédé de réalisation de pièces en matériau composite, comprenant le drapage de fibres sur une surface d'application, **caractérisé en ce que** ledit drapage est réalisé au moyen d'une machine d'application de fibres selon l'une des revendications 1 à 7.

## Patentansprüche

1. Faserapplikationsmaschine für die Herstellung von Teilen aus Verbundmaterial, umfassend einen Faserapplikationskopf, umfassend
- eine Applikationswalze (5, 5'),
- ein Führungssystem (4), um eine Faser oder mehrere Fasern (F1, F2) in Form eines Bandes zu der Applikationswalze zu führen, und
- mindestens ein Schneidesystem (7), umfassend eine Klinge (71), die imstande ist, von einem Schneidezylinder (73) zwischen einer Ruhestellung und einer aktiven Stellung bedient zu werden, um eine Faser zu schneiden,
wobei jedes Schneidesystem (7) eine Gegenklinge (72) umfasst, die durch ihre Schneidkante (721a) elastisch abgestützt auf der Klinge (71) gehalten wird, um durch Scheren eine Faser bei der Verlagerung der Klinge (71) aus ihrer Ruhestellung in ihre aktive Stellung zu schneiden.

2. Maschine nach Anspruch 1, **dadurch gekennzeichnet, dass** die Klinge (71) eine Öffnung (710) für den Durchgang einer Faser umfasst, wobei die Öffnung einen Schneiderand (712) definiert.

3. Maschine nach Anspruch 2, **dadurch gekennzeichnet, dass** die Gegenklinge zwischen dem Schneiderand (712) der Klinge und dem Schneidezylinder (73) angeordnet ist, wenn die Klinge in ihrer Ruhestellung ist, so dass der Schnitt durch Zurückziehen der Zylinderstange erfolgt.

4. Maschine nach einem der Ansprüche 1 bis 3, **dadurch gekennzeichnet, dass** die Gegenklinge (71) auf einem Hebel (75) angebracht ist, der um eine Achse (A10) schwenkend angebracht ist, wobei der Hebel von einer Feder (76) elastisch beansprucht wird, um die Gegenklinge abgestützt auf der Klinge (71) zu halten.

5. Maschine nach einem der Ansprüche 1 bis 4, **dadurch gekennzeichnet, dass** die Klinge (71) und die Gegenklinge (72) zwischen sich einen Winkel (α) zwischen 1° und 4°, vorzugsweise zwischen 2° und 3°, bilden.

6. Maschine nach einem der Ansprüche 1 bis 5, **dadurch gekennzeichnet, dass** die Klinge und/oder die Gegenklinge mit Mikrozahnungen ausgestattet sind.

7. Maschine nach einem der Ansprüche 1 bis 6, **dadurch gekennzeichnet, dass** die Klinge (71) und die Gegenklinge (72) auf demselben Halter (6a, 6b) angebracht sind.

8. Verfahren zur Herstellung von Teilen aus Verbundmaterial, umfassend das Auflegen von Fasern auf einer Applikationsfläche, **dadurch gekennzeichnet, dass** das Auflegen mit einer Faserapplikationsmaschine nach einem der Ansprüche 1 bis 7 erfolgt.

## Claims

1. Fibre application machine for producing parts made of composite material comprising a fibre application head comprising
- an application roller (5, 5'),
- a guide system (4) for guiding one fibre or several fibres (F1, F2) in the form of a strip towards said application roller, and
- at least one cutting system (7) comprising a blade (71) capable of being manoeuvred by a cutting cylinder (73) between a rest position and an active position for cutting a fibre,
each cutting system (7) comprising a counter-blade (72) elastically held against the blade (71) by the cutting ridge (721a) thereof, for cutting by shearing a fibre while the blade (71) moves from the rest position thereof towards the active position thereof.

2. Machine according to claim 1, **characterised in that** the blade (71) comprises an opening (710) for the passage of a fibre, said opening defining a cutting edge (712).

3. Machine according to claim 2, **characterised in that** the counter-blade is arranged between the cutting edge (712) of the blade and the cutting cylinder (73) when the blade is in the rest position thereof, such that the cut is made by retracting the cylinder rod.

4. Machine according to one of claims 1 to 3, **characterised in that** the counter-blade (71) is mounted on a lever (75) mounted pivoting around an axis (A10), said lever being elastically applied by a spring (76) to hold the counter-blade pressed against the blade (71).

5. Machine according to one of claims 1 to 4, **characterised in that** the blade (71) and the counter-blade (72) form an angle (α) of between 1° and 4° between them, preferably between 2° and 3°.

6. Machine according to one of claims 1 to 5, **characterised in that** the blade and/or the counter-blade are equipped with micro-serrated teeth.

7. Machine according to one of claims 1 to 6, **characterised in that** the blade (71) and the counter-blade (72) are mounted on one same support (6a, 6b).

8. Method for producing parts made of composite material, comprising the layup of fibres onto an application surface, **characterised in that** said layup is carried out by means of a fibre application machine according to one of claims 1 to 7.
